# FASCICULE DE BREVET EUROPEEN

(11) **EP 2 156 498 B1**
(45) Date de publication et mention de la délivrance du brevet: **02.05.2012**
(21) Numéro de dépôt: 08775684.7
(22) Date de dépôt: 06.03.2008
(51) Int. Cl.: H01M 8/10, H01M 8/02, H01M 8/06, H01M 4/92, H01M 2/16, C04B 35/583, C08J 5/22, C01B 3/00, C04B 35/622, H01B 1/12, H01M 4/38, H01M 8/12

(54) **PROCEDE D'ACTIVATION DE NITRURE DE BORE**
VERFAHREN ZUM AKTIVIEREN VON BORNITRID
METHOD OF ACTIVATING BORON NITRIDE

(30) Priorité: 28.05.2007 FR 0755287
(43) Date de publication de la demande: 24.02.2010
(73) Titulaire: Ceram Hyd, 77210 Avon (FR)
(72) Inventeur: MOFAKHAMI, Arash, F-77760 Buthiers (FR)
(74) Mandataire: Tanty, François
(86) Numéro de dépôt international: PCT/FR2008/050381
(87) Numéro de publication internationale: WO 2008/148957

(56) Documents cités:
- WO-A-96/07623
- WO-A-03/062152
- WO-A-2006/003328
- KOJIMA ET AL: "Hydrogen storage of metal nitrides by a mechanochemical reaction" JOURNAL OF POWER SOURCES, ELSEVIER, AMSTERDAM, NL, vol. 159, no. 1, 13 septembre 2006 (2006-09-13), pages 81-87, XP005630200 ISSN: 0378-7753

## Description

La présente invention concerne la fabrication de nitrure de bore activé, et plus particulièrement de nitrure de bore activé utilisé dans les piles à combustibles. électrolyseur ou accumulateur.

WO 2006/003328 divulgue l'utilisation d'une céramique de nitrure de bore pour réaliser une collision entre protons et électrons et stocker de l'hydrogène.

La demande WO 03/062152 porte sur un procédé d'épuration d'eaux usées par électroflotation.

WO 96/07623 divulgue l'utilisation de nitrure de bore pour réaliser des articles en céramique.

L'invention vise notamment à proposer un procédé d'activation du nitrure de bore permettant d'améliorer la conduction protonique de ce matériau, ce qui est avantageux notamment dans le cas où ce dernier est utilisé dans la fabrication d'une pile à combustible, d'un électrolyseur ou d'un accumulateur.

L'invention a ainsi pour objet, selon l'un de ses aspects, un procédé d'activation de nitrure de bore, comportant les étapes suivantes :
i) exposer le nitrure de bore à un fluide permettant de fournir des ions H₃O⁻ et/ou des radicaux hydroxyle -OH et de créer dans le nitrure de bore des liaisons B-OH et/ou des liaisons NH,
ii) éliminer le fluide et récupérer le nitrure de bore activé.

Un proton peut se greffer facilement sur l'oxygène de l'hydroxyle et/ou sur l'azote de NH, de sorte que la conduction protonique du nitrure de bore est améliorée.

Par activation du nitrure de bore, on entend un procédé permettant de favoriser la conduction protonique dans le nitrure de bore. Dans du nitrure de bore entièrement activé, le nombre de liaisons B-OH et NH formées est suffisant pour permettre le déplacement d'un proton d'un doublet disponible sur l'oxygène d'un groupement B-OH ou l'azote d'un groupement NH à un autre doublet voisin, formant successivement des groupements NH₂⁺ et BOH₂⁺.

La conduction des protons peut encore s'effectuer grâce à dés doublets disponibles sur des atomes d'oxygéne insérés dans des lacunes d'azote du nitrure de bore. De telles lacunes d'azote contenant des atomes d'oxygène peuvent être notamment présentes lorsque le nitrure de bore a été obtenu à partir de B₂O₃ ou de H₃BO₃.

Le nitrure de bore active peut ensuite être utilisé pour fabriquer une pile à combustible, un électrolyseur ou un accumulateur.

Le fluide peut être une solution. Le fluide peut par exemple être une solution acide contenant des ions H₃O⁺, par exemple des acides forts tel que HCl, H₂SO₄, H₃PO₄ ou des acides faibles ou encore ne pas être une solution acide, mais par exemple une solution basique contenant des ions OH⁻, par exemple une solution de soude, de potasse. La concentration de la solution peut avoir une influence sur la vitesse et le niveau d'activation obtenu, i.e. sur le niveau de conductivité protonique obtenue, mais non pas sur l'apparition de l'activation elle-même. La concentration en acide peut par exemple être comprise entre 1 et 5 mol/L et la concentration de la soude être comprise entre 0,5 et 1 mol/L. Le pH peut par exemple être de 1.

Le fluide utilisé peut encore être simplement de l'eau.

Dans ce cas par exemple, on peut également plonger dans le fluide du fer, par exemple sous la forme d'une grille de fer, et soumettre le tout à un champ électrique afin de favoriser la création d'oxyde de fer et d'ions OH⁻.

Le fluide peut être un gaz, par exemple de la vapeur d'eau portée à haute température, par exemple de l'ordre de 300 °C.

Le fluide peut encore être biphasique, par exemple se présentant sous la forme d'un brouillard.

Afin de favoriser la création de liaisons B-OH et NH₂, on peut soumettre le nitrure de bore et le fluide à un champ électrique, par exemple un champ électrique compris entre 15 et 40000 V/m, voire de l'ordre de 15000 V/m. Un champ de 15000 V/m équivaut à appliquer une tension de 1,5 V pour une épaisseur de nitrure de bord de 100µm ou encore 15 V pour une épaisseur de 1 mm.

La tension appliquée peut être par exemple comprise entre 1,5 V et 50 V, par exemple de l'ordre de 30 V. La source de tension peut être constante, ou en variante non constante. Elle peut être configurée pour détecter la fin de l'activation automatiquement, par exemple lorsque la densité de courant dans le nitrure de bore augmente brutalement. L'intensité du courant circulant durant l'activation dans le nitrure de bore peut être de l'ordre de 10 mA/cm² à 1000 mA/cm².

Le champ électrique peut être créé par un générateur extérieur.

Les électrodes utilisées, cathode et anode, peuvent par exemple être en platine. La forme des électrodes peut par exemple être plane ou en variante non plane. Elles peuvent par exemple se présenter sous la forme de grilles. Les électrodes peuvent être orientées verticalement, ou en variante non verticalement, par exemple horizontalement ou non.

La présence d'un champ électrique peut par exemple permettre de surmonter l'hydrophobie naturelle du nitrure de bore. Du dihydrogène peut être produit à la cathode au cours de l'activation, puis du dioxygène à l'anode. Le dihydrogène et le dioxygène formés à l'anode et à la cathode peuvent être récupérés dans des réservoirs.

Le fluide peut être forcé à circuler de part et d'autre du nitrure de bore, par exemple au moyen d'une pompe.

L'activation par un fluide peut être effectuée à une température comprise entre 0 et 90 °C, par exemple de l'ordre de 60 °C, voire à température ambiante.

L'activation par un gaz tel que la vapeur d'eau peut être effectuée par exemple dans une enceinte fermée de la manière suivante : Le nitrure de bord est porté à une température de 600 °C sous balayage de gaz neutre, i.e. hors présence d'oxygène et d'eau. Le nitrure de bord est ensuite refroidi de 600 °C à température ambiante en étant alors soumis à un balayage d'air saturé en humidité à température contrôlée.

Le nitrure de bore peut être activé dans une solution de soude, avec ou sans application d'un champ électrique.

Le nitrure de bore peut être cristallisé sous une forme hexagonale.

Le procédé peut être mis en oeuvre, dans une variante de réalisation, avec du nitrure de bore turbostratique, c'est-à-dire dont les plans de cristallisation peuvent être légèrement décalés par rapport à la position de cristallisation théorique, par exemple de cristallisation hexagonale du nitrure de bore, ce qui conduit à un décalage des empilements des plans et un moins bon maintien des plans entre eux, ces derniers étant légèrement plus écartés.

L'activation du nitrure de bore peut encore être favorisée lorsque ce dernier se présente sous une forme pulvérulente, par exemple sous la forme de grains de petite taille, c'est-à-dire de l'ordre de quelques micromètres. Les grains peuvent par exemple avoir une taille moyenne supérieure à 1 nm, voire supérieure à 10 nm, voire supérieure à 5 µm et inférieure à 20 µm, voire de l'ordre de 10 µ. Les grains peuvent être eux-mêmes composés de cristallites de taille moyenne comprise entre 0,1 et 0,5 µm.

Lorsque le nitrure de bore se présente sous la forme d'une couche, les grains de nitrure de bore peuvent être orientés de préférence non tous parallèlement à la couche, mais par exemple perpendiculairement à celle-ci, de manière à assurer une meilleure tenue mécanique, ou encore de manière hétérogène, afin d'assurer une meilleure conduction protonique.

Le nitrure de bore peut comporter des grains de nitrure de bore percolés, par exemple maintenus solidaires les uns des autres par un composé, par exemple un composé de la liste suivante : nickel, oxyde de bore, barate de calcium, éthyle cellulose, acide borique, polyvinyle alcool, vinylcaprolactame, PTFE (Téflon^{®}), Polyéthyle sulfone sulfoné.

Le nitrure de bore peut être activé sous sa forme pulvérulente avant insertion dans un liant, par exemple dans un polymère, ou encore après insertion dans ce liant, par exemple en fonction du liant utilisé. Le nitrure de bore peut être inséré, par exemple sous forme pulvérulente, dans une membrane polymère, ce qui peut lui assurer une très bonne conductivité protonique, par exemple un polymère conducteur ionique, et plus généralement tout matériau échangeur ionique.

Le nitrure de bore utilisé peut être associé à l'un ou plusieurs des composés de la liste suivante : polymère, polymère conducteur ionique, PVA, acide borique.

Le nitrure de bore utilisé peut être incorporé dans une membrane polymère avant activation. En variante, le nitrure de bore activé peut être inséré dans un liant, par exemple de l'acide borique ou une membrane polymère, avant d'être utilisé pour la fabrication d'une pile à combustible, un électrolyseur ou un accumulateur. L'incorporation peut être faite avant la polymérisation ou après la polymérisation, et avant l'extension ou le moulage.

Le polymère peut par exemple être du PVA, polyvinylalcool, vinylcaprolactame, PTFE, polyéther sulfone sulfoné.

Le nitrure de bore peut se présenter sous la forme de grains, par exemple d'une taille médiane comprise entre 5 et 15 µm, voire entre 7 et 11 µm. La proportion massique de nitrure de bore dans la membrane peut être comprise entre 5 et 100 %, par exemple jusqu'à 70 %. La couche peut être entièrement formée de poudre de nitrure de bore fritté à haute pression. En variante, elle peut comporter le nitrure de bord et un liant, étant fabriquée par un procédé HIP (Hot Isostatic Pressure).

Lorsque le nitrure de bore se présente sous la forme d'une membrane, l'épaisseur de cette membrane peut être comprise entre 0,05 et 5 mm. La surface de la membrane soumise à l'activation peut être comprise entre 0,5 cm² et 1 m².

Le polymère, par exemple du PVA, peut être utilisé pour boucher les porosités présentes dans le nitrure de bore. L'ajout du polymère peut par exemple être effectué sous vide, de telle sorte que ce dernier est aspiré dans les porosités du nitrure de bore.

Le nitrure de bore peut être associé, avant ou après activation, avec l'un ou plusieurs des composés de la liste suivante, qui n'est pas limitative : composé inorganique, par exemple silice, par exemple sous forme d'aérocil^{®}, de silice amorphe pyrogénée, silice organique avec groupe thiol, silice avec fonction d'acide phosphonique, silice avec acide sulfonique ancré en surface, alumine, zircone, zircone sulfaté, oxyde de titane, oxyde de titane sulfoné, trioxyde de tungstène, trioxyde de tungstène hydraté, hétéropolyacide, par exemple polytriacétylène (PTA), polyacide méthacrylique (PTA), STA, SMA, acide tungstophosphorique (TPA), acide molybdophosphorique (MBA), sel d'acide tungstophosphorique de disodium (NA-TPA), acide phosphomolybdique (PMA), hétéropolyacide lacunaire H₈SiW₁₁O₃₉, hétéropolyacide sulfonique fonctionnalisé, PWA, acide silico-tungstique, PTA supporté sur SiO₂, ZrO₂ et TiO₂, hétéropolyacide chargé MCM-41, matériau mésoporeux de silicate de tungstène SI-MCM-41, hétéropolyacide chargé en Y-zéolyte, acide silico tungstique, phosphate de zircone, phosphate de zircone sulfophényle (ZRSPP), phosphate de zircone hydrogéné ZR (HPO₄)₂, tricarboxybutyl phosphonate de zircone, sulfophénylène phosphonate de zircone, Zr(HPO₄)₁₀ (O₃PC₆H₄SO₃H)₁₀, sulfophénylène phosphonate de phosphate de zircone, phosphate de zircone sulfonée, sel d'acide silico-tungstique de celsium, nanoparticules multicouches silicatées, par exemple montmorillonite, laponite, montmorillonite modifiée, par exemple montmorillonite sulfonée, MCM-41, montmorillonite organique (OMMT), montmorillonite greffée de sultones organiques et de sultones perfluorinées, phosphosilicates (P₂O₅-SiO₂), acide phosphato-antimonique, métaux nobles, par exemple platine, ruthénium, silicate de platine enrobé de Nafion^{®}, argent, zéolyte, chabasite et clinoptylolite, mordonite, phosphate, phosphate de calcium, hydroxyphosphate de calcium, phosphate de boron, composé organique, polymère, Nafion^{®} (Dupont de Nemours), acide perfluorosulfonique, polysulfone sulfoné, PEO, polyaniline, poly(vinylidène)fluoride-chlorotétrafluoroéthylène, PEG, DBSA, acide 4-dodécylbenzène sulfonique, SEBSS (styrène sulfoné, styrène-(éthylène-butylène) sulfoné), PVA, glutaraldéide, krytox, diphénylsilicate, diphényldiméthoxysilicate, poly(éthersulfone) sulfoné, PVDF, membrane Nafion^{®} NRE-212, Cs_{2,5} H_{0,5} PWO₄₀, PVDF-G-PSSA, polyvinylidène fluoride, polyacrylonitryl, acide dodéca-tungstophosphorique, (poly)étheréthercétone sulfoné (SPEEK), PVA, PEO, poly(arylèneéthersulfone) sulfoné, polyvinylalcool, PEEK (s-polyétheréthercétone), polyéthersulfone sulfoné cardo, oxyde de polyphénylène (PPO), polyéthylène glycol, nanoparticules de silice, tungstosilicate divacant [γ-SiW₁₀O₃₆]⁸⁻, PWA, PBI, PEG, polyéthylènimine (PEI), poly(arylèneéthersulfone) disulfoné, Téflon^{®}, divynilbenzène (DVB réticulé) sulfoné, poly(éthylène-alt-tétrafluroroéthylène) greffée de polystyrène, poly(vinyldifluoride), polybenzimide azole, PVDF, poly(étheréthercétone) sulfoné cardo, poly(arylèneéther fluoré)S, Nafion^{®} 115, polyimide, polyamidimide (PAI), polyvinylidène fluoride (PVDF), styrène-éthylène-butylène-styrène élastomère (SEBS), polyte (biphényl éther sulfone sulfoné), polytétrafluoroéthylène (PTFE), PBI.

Une membrane contenant 99 à 100 % de nitrure de bore peut être obtenue par le procédé suivant.

Des grains de nitrure de bore sont mélangés à un liant polymère sous forme liquide, ce mélange étant coulé ou sérigraphié ou encore imprimé selon les épaisseurs de couches souhaitées sur un substrat, puis chauffé à une température suffisante de manière à provoquer la calcination du liant , par exemple à une température de l'ordre de 600 ou 700 °C, de sorte que les grains de nitrure de bore sont percolés, entre eux sur le substrat, c'est-à-dire qu'ils se touchent.

Dans une étape supplémentaire, le résultat obtenu est chauffé à une température comprise entre 800 et 1700 °C, voire entre 1000 et 1500 °C sous une atmosphère neutre, par exemple d'azote ou d'argon, provoquant le frittage des grains entre eux.

Enfin, dans une étape supplémentaire, on enlève le substrat et on obtient une membrane rigide de nitrure de bore composée de grains frittés.

Enfin, l'activation peut être favorisée lorsque le nitrure de bore utilisé présente au moins un, par exemple un ou plusieurs, additif(s) de la liste suivante : oxygène, oxyde de bore, borate de calcium, acide borique.

Les additifs peuvent favoriser l'activation lorsqu'ils sont présents dans une proportion massique comprise entre 1 et 10 %.

La présence d'acide borique, par exemple présent dans les porosités du nitrure de bore peut permettre de favoriser la création des liaisons B-OH.

On peut rincer le nitrure de bore activé, puis éventuellement le sécher avant de l'utiliser pour fabriquer une pile à combustible, un électrolyseur ou un accumulateur.

Pour rincer le nitrure de bore activé, on peut par exemple faire circuler, à la place du fluide, de l'eau, de l'acétone ou de l'éthanol, en l'absence de champ électrique et de chauffage.

On peut éliminer le fluide de sorte que sa teneur résiduelle au sein du nitrure de bore activé soit inférieure à 5%.

L'étape d'exposition au fluide peut avoir une durée supérieure à 3 heures, par exemple comprise entre 10 et 50 heures, voire entre 15 et 45 heures, mieux entre 20 et 72 heures par exemple.

L'invention pourra être mieux comprise à la lecture de la description détaillée qui va suivre, d'un exemple de mise en oeuvre non limitative de celle-ci, et à l'examen du dessin annexé, sur lequel:
- la figure 1 est un schéma bloc illustrant le procédé conforme à l'invention,
- la figure 2 est une vue schématique et partielle d'une pile à combustible comportant du nitrure de bore activé conformément à l'invention,
- la figure 3 est une vue en perspective, schématique et partielle, d'un dispositif d'activation de nitrure de bord,
- la figure 4 est une vue de dessus, schématique et partielle, d'une variante de dispositif d'activation de nitrure de bore,
- la figure 5 illustre la variation de densité de courant au cours de l'activation d'une membrane, et
- la figure 6 représente les spectres infrarouges de nitrure de bore activé et de nitrure de bore brut.

Sur le dessin, les proportions relatives des divers éléments n'ont pas toujours été respectées, dans un souci de clarté.

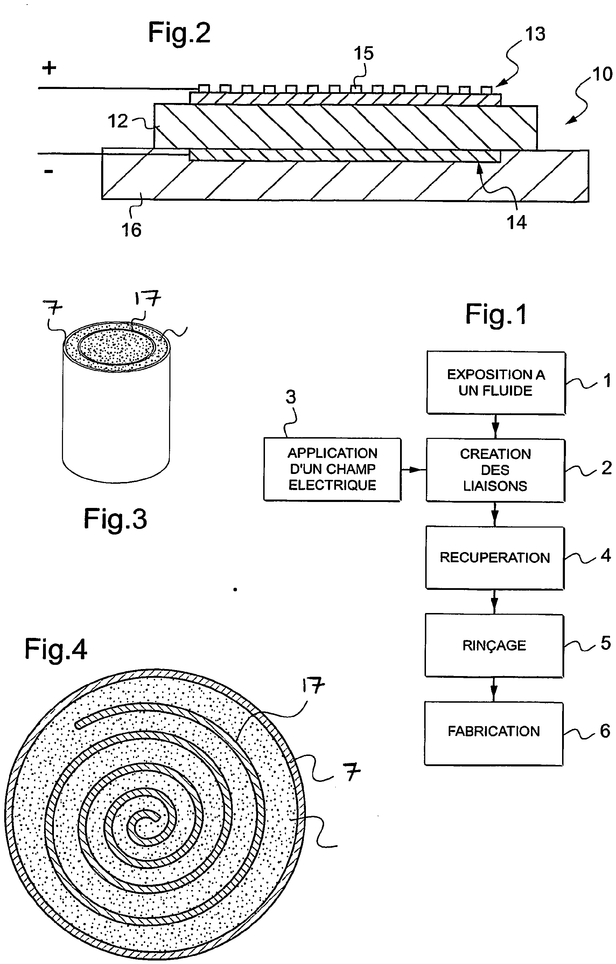

On va décrire en référence à la figure 1 un exemple de procédé d'activation conforme à l'invention.

On utilise du nitrure de bore qui peut être hexagonal, voire hexagonal turbostratique, et qui se présente dans un mode de réalisation de l'invention sous une forme pulvérulente. L'activation peut en être facilitée. Les grains de nitrure de bore peuvent être percolés. Le nitrure de bore peut présenter au moins une impureté qui peut favoriser l'activation.

Le nitrure de bore sélectionné est, dans une première étape 1, exposé à un fluide permettant de fournir des ions H₃O⁺ et/ou radicaux hydroxyles -OH, par exemple une solution acide ou basique, voire tout simplement de l'eau.

Le nitrure de bore pulvérulent peut être disposé dans un creuset lui-même réalisé en nitrure de bore, afin d'assurer la conductivité protonique, ou dans un autre matériau.

Dans une deuxième étape 2, des liaisons sont créées entre le nitrure de bore et les radicaux hydroxyles, notamment des liaisons B-OH, et/ou des liaisons sont créées avec des atomes d'azote du nitrure de bore, pour former des liaisons N-H.

L'activation peut être favorisée en impliquant un champ électrique, par exemple au moyen d'une cathode et d'une anode trempées dans la solution, l'une de ces deux électrodes pouvant être utilisée et conservée ultérieurement pour la fabrication de la pile à combustible.

Après activation, on récupère dans une étape 4 le nitrure de bore activé, qui peut éventuellement dans une étape 5 être rincé, avant de procéder à la fabrication d'une pile à combustible, d'un électrolyseur ou d'un accumulateur, dans une étape 6.

Le nitrure de bore utilisé peut encore être associé à un liant, par exemple un polymère, avant l'activation ou après l'activation et avant la fabrication de la pile à combustible, afin de fabriquer au moyen de ce liant et du nitrure de bore activé une membrane échangeuse protonique.

On a représenté à la figure 2, de manière schématique et partielle, une pile à combustible 10 comportant une membrane échangeuse protonique 12 formée de nitrure de bore activé conformément à l'invention. Dans l'exemple décrit, il s'agit d'une céramique de nitrure de bore hexagonal activé h-BN. La pile à combustible 10 comporte une anode 13 d'un côté de la membrane échangeuse protonique 12 et une cathode 14 de l'autre côté de celle-ci.

L'anode 13 comporte par exemple une couche servant à la réaction d'oxydation, par exemple un composé métallique tel que le platine ou l'or, ou composite tel que le graphite platine ou le graphite or, et la cathode 14 une couche d'un catalyseur pour le combustible, par exemple une couche de platine, de nickel, de graphite nickel, ou de graphite platine, chaque couche pouvant être au contact de la membrane 12.

La membrane échangeuse protonique 12 ainsi que les deux couches disposées de part et d'autres de celle-ci peuvent être supportées par un substrat 16 poreux et inerte, tel que par exemple une couche d'alumine, de zircone, ou de nitrure de bore poreuse.

Des conducteurs électriques peuvent contacter l'anode 13 et la cathode 14.

L'anode 13 peut par exemple comporter sur la couche servant à la réaction d'oxydation un dépôt d'or, par exemple sous la forme d'une trame 15, afin de récolter le courant électrique.

L'épaisseur de la membrane échangeuse 12 est par exemple de 100 µm et celle des couches servant à la réaction d'oxydation et de catalyseur va par exemple de 10 à 30 et 100 µm.

Dans un exemple de mise en oeuvre de l'invention, la membrane échangeuse protonique 12 est réalisée à partir d'une céramique de nitrure de bore h-BN de référence HIP de la société SAINT-GOBAIN, activée par exposition à un acide, par exemple de l'acide sulfurique.

L'exposition à l'acide peut s'effectuer par exemple pendant plusieurs heures, l'acide sulfurique étant par exemple de concentration 0,1M à 5M, par exemple 5M. Lors de cette exposition, la membrane peut, le cas échéant, être exposée à un champ électrique d'environ 30 000 V/m, c'est-à-dire à une tension de 30 V lorsque l'épaisseur de la membrane est de 1 µm, ce qui peut améliorer la qualité de l'activation. La céramique est rincée après exposition à l'acide. Sans être lié par une théorie, l'activation peut permettre de modifier les liaisons pendantes des grains du nitrure de bore.

Lorsque la membrane est activée en présence d'un champ électrique, ce champ électrique peut être généré entre deux électrodes. L'anode peut être ou non au contact de la membrane et est au contact de l'électrolyte acide et eau. La cathode doit être au contact seulement de la membrane, et non au contact de l'acide.

En variante, la cathode peut elle aussi être plongée dans l'acide dans un compartiment cathodique. Dans ce cas, il existe deux compartiments, un anodique et un cathodique, séparés de manière étanche par la membrane. Chaque compartiment contient de l'acide et les électrodes sont au contact ou non avec la membrane.

En variante encore, le nitrure de bore peut être déposé sous forme de poudre dans un creuset 7 dans lequel est également inséré la cathode 17, comme illustré à la figure 3. Le creuset peut être réalisé en nitrure de bord, afin de favoriser l'activation. L'ensemble est alors plongé dans l'électrolyte.

Dans une variante encore, la cathode 15 peut avoir une forme spiralée, comme illustré à la figure 4.

Il peut s'agir d'électrodes ne servant qu'au processus d'activation et non utiles par la suite, ne se retrouvant par exemple pas dans le système utilisant la membrane. Il peut s'agir aussi d'électrodes dont l'une se retrouve dans le système final, notamment la cathode par exemple.

Au moins l'une des électrodes servant à l'activation, voire les deux, peuvent être au contact de la membrane et être par exemple fixée de manière permanente à celle-ci. L'une des électrodes servant à l'activation est par exemple une anode en platine, d'autre éléments conducteurs électriques pouvant être utilisés sous réserve qu'ils ne s'oxydent pas ni ne se dégradent rapidement.

L'anode peut encore être en platine poreux si celui-ci est au contact de la membrane. L'autre électrode, poreuse aussi, est une cathode en n'importe quel matériau conducteur électrique. Ces électrodes peuvent être plaquées, par exemple par des procédés de dépôt en couches fines, contre la membrane.

Bien entendu, on ne sort pas du cadre de la présente invention en apportant des modifications aux exemples qui viennent d'être donnés ci-dessus.

On peut notamment ne revêtir de platine, nickel ou d'un alliage de ces deux métaux, la membrane échangeuse que sur l'anode et utiliser une plaque poreuse de titane comme collecteur de courant. On peut aussi ne revêtir que d'un alliage d'oxydes RuO₂, IrO₂, SnO₂ ou TiO₂ la membrane échangeuse sur l'anode et n'utiliser qu'une plaque poreuse de titane comme collecteur de courant L'autre face correspondant à la cathode est par exemple rendue conductrice par dépôt d'un métal tel qu'une laque de cuivre ou d'argent.

La membrane échangeuse protonique peut présenter diverses formes, par exemple une forme plane ou cylindrique.

La membrane échangeuse protonique 12 peut être utilisée au sein d'un électrolyseur comportant une cathode métallique, par exemple en platine ou d'autres conducteurs électriques, l'anode étant par exemple en platine également.

En variante encore, la membrane échangeuse 12 peut être utilisée au sein d'un accumulateur, l'anode étant pas exemple réalisée en platine ou nickel et en contact d'un électrolyte aqueux acide, par exemple une solution d'acide sulfurique, tandis que la cathode comporte un matériau hydrurable.

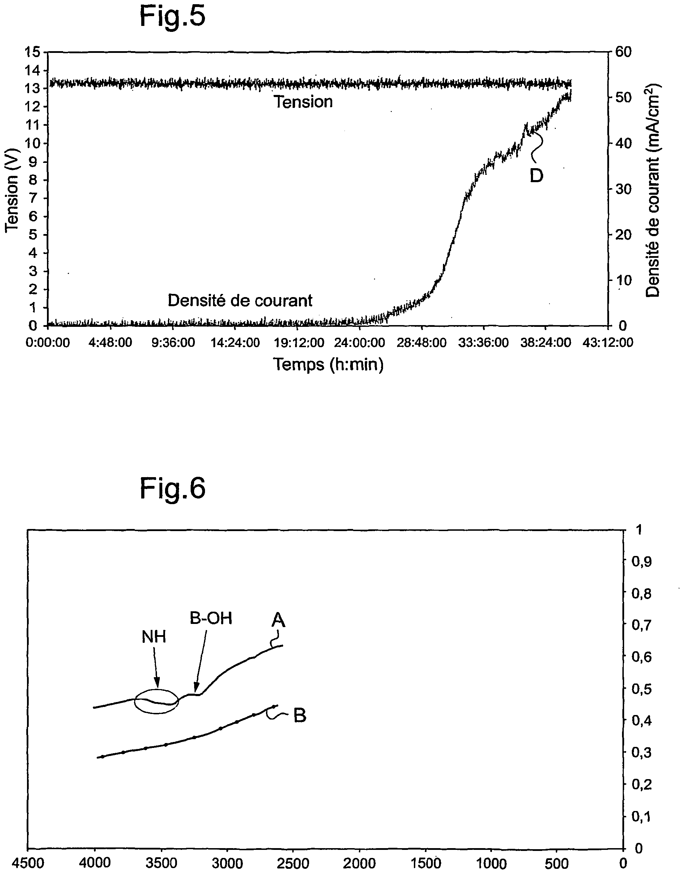

On va maintenant décrire en référence aux figures 5 et 6 le résultat de l'activation sur le nitrure de bore.

On a illustré à la figure 5 l'évolution de la densité de courant et de la tension au cours de l'activation du nitrure de bore. On constate que la densité de courant D augmente brutalement au bout d'un certain temps, à savoir une trentaine d'heures environ dans l'exemple décrit, ce qui illustre le fait que la conduction protonique dans le nitrure de bore est assurée.

On a illustré à la figure 6 les spectres infrarouges du nitrure de bore activé A et du nitrure de bore brut B, c'est-à dire avant activation.

On constate en observant ces spectres A et B qu'ils sont de forme différentes. On peut noter la présence de deux creux sur le spectre A qui ne sont pas présents sur le spectre B. Ces creux illustrent la présence des liaisons B-OH et N-H, qui résultent de l'activation du nitrure de bore.

On peut constater également l'activation du nitrure de bore en mesurant la conductivité protonique de ce dernier. Du nitrure de bore brut, c'est-à-dire non activé, peut avoir une conductivité protonique de l'ordre de 10⁻⁵ Siemens/cm, tandis que du nitrure de bore activé peut avoir une conductivité protonique de l'ordre de 10⁻³ à 10⁻² Siemens/cm, par exemple de 5.10⁻³ Siemens/cm.

A titre de comparaison, le Nafion peut avoir une conductivité protonique de l'ordre de 0,1 à 1 Siemens/cm.

L'expression « comportant un » doit être comprise comme étant synonyme de « comportant au moins un ».

## Revendications

1. Procédé d'activation de nitrure de bore, comportant les étapes suivantes :
i) exposer (1) le nitrure de bore à un fluide permettant de fournir des radicaux hydroxyles -OH et/ou des ions H₃O⁺ et de créer (2) dans le nitrure de bore des liaisons B-OH et/ou des liaisons NH₂,
ii) éliminer le fluide et récupérer (4) le nitrure de bore activé.

2. Procédé selon la revendication précédente, dans lequel on soumet le nitrure de bore et le fluide à un champ électrique.

3. Procédé selon l'une des deux revendications précédentes, dans lequel le fluide est une solution, notamment :
une solution acide ou
une solution basique ou de l'eau.

4. Procédé selon l'une quelconque des revendications 1 ou 2, dans lequel le fluide est un gaz.

5. Procédé selon l'une quelconque des revendications précédentes, dans lequel le nitrure de bore est cristallisé sous une forme hexagonale.

6. Procédé selon l'une quelconque des revendications précédentes, dans lequel le nitrure de bore est turbostratique.

7. Procédé selon l'une quelconque des revendications précédentes, dans lequel le nitrure de bore utilisé se présente sous une forme pulvérulente.

8. Procédé selon l'une quelconque des revendications précédentes, dans lequel le nitrure de bore utilisé comporte des grains de nitrure de bord percolés.

9. Procédé selon l'une quelconque des revendications précédentes, dans lequel le nitrure de bore utilisé présente au moins un additif de la liste suivante : oxygène, oxyde de bore, borate de calcium, acide borique.

10. Procédé selon l'une quelconque des revendications précédentes, dans lequel le nitrure de bore utilisé est associé à l'un ou plusieurs des composés de la liste suivante :
polymère, polymère conducteur ionique, PVA, acide borique.

11. Procédé selon l'une quelconque des revendications précédentes, dans lequel le nitrure de bore utilisé est inséré dans une membrane polymère avant activation.

12. Procédé selon l'une quelconque des revendications 1 à 14, dans lequel le nitrure de bore activé est incorporé dans une membrane polymère avant d'être utilisé pour la fabrication d'une pile à combustible, un électrolyseur ou un accumulateur.

13. Procédé selon l'une quelconque des revendications précédentes, dans lequel on rince le nitrure de bore activé.

14. Procédé selon l'une quelconque des revendications précédentes, dans lequel l'étape d'exposition au fluide a une durée compris entre 10 et 50 heures, voire entre 15 et 45 heures.

## Claims

1. A method for activating boron nitride, comprising the following steps:
(i) exposing (1) the boron nitride to a fluid enabling -OH hydroxyl radicals and/or H₃O⁺ ions to be provided and creating (2) B-OH bonds and/or NH₂ bonds in the boron nitride,
(ii) eliminating the fluid and recovering (4) the activated boron nitride.

2. The method according to the preceding claim, wherein the boron nitride and the fluid are subject to an electric field.

3. The method according to any one of the two preceding claims, wherein the fluid is a solution, in particular:
an acid solution, or
a basic solution or water.

4. The method according to claim 1 or claim 2, wherein the fluid is a gas.

5. The method according to any preceding claim, wherein the boron nitride is crystallized in hexagonal form.

6. The method according to any preceding claim, wherein the boron nitride is turbostratic.

7. The method according to any preceding claim, wherein the boron nitride used appears in a powdery form.

8. The method according to any preceding claim, wherein the boron nitride used comprises percolated grains of boron nitride.

9. The method according to any preceding claim, wherein the boron nitride used has at least one additive from the following list: oxygen, boron oxide, calcium borate, boric acid.

10. The method according to any preceding claim, wherein the boron nitride used is associated with one or more of the compounds of the following list: polymer, ion-conducting polymer, PVA, boric acid.

11. The method according to any preceding claim, wherein the boron nitride used is inserted into a polymeric membrane before activation.

12. The method according to any one of claims 1 to 11, the activated boron nitride is incorporated into a polymeric membrane before being used for making a fuel cell, an electrolyzer or an accumulator.

13. The method according to any preceding claim, wherein the activated boron nitride is rinsed.

14. The method according to any preceding claim, wherein the step for exposure to the fluid has a duration comprised between 10 and 50 hours, or even between 15 and 45 hours.

## Patentansprüche

1. Verfahren zum Aktivieren von Bornitrid, mit den folgenden Schritten:
i) Behandeln (1), des Bornitrids mit einem Fluid, das es erlaubt, Hydroxylradikale -OH und/oder H₃O⁺ Radikale zu liefern und in dem Bornitrid B-OH- und/oder NH₂-Bindungen zu erzeugen (2),
ii) Entfernen des Fluids und Zurückgewinnen (4) des aktivierten Bornitrids.

2. Verfahren nach dem vorstehenden Anspruch, bei dem man das Bornitrid und das Fluid einem elektrischen Feld aussetzt.

3. Verfahren nach der beiden vorstehenden Ansprüche, bei dem das Fluid eine Lösung ist, insbesondere:
eine saure Lösung oder
eine basische Lösung oder Wasser.

4. Verfahren nach der Ansprüche 1 und 2, bei dem das Fluid ein Gas ist.

5. Verfahren nach einem der vorstehenden Ansprüche, bei dem das Bornitrid in hexagonaler Form kristallisiert wird.

6. Verfahren nach der vorstehenden Ansprüche, bei dem das Bornitrid turbostratal ist.

7. Verfahren nach einem der vorstehenden Ansprüche, bei dem das verwendete Bornitrid in einer pulverigen Form vorliegt.

8. Verfahren nach einem der vorstehenden Ansprüche, bei dem das verwendete Bornitrid Körner aus perkoliertem Bornitrid enthält.

9. Verfahren nach einem der vorstehenden Ansprüche, bei dem das verwendete Bonitrid wenigstens ein Additiv aus der folgenden Liste enthält: Sauerstoff, Boroxid, Kalziumborat, Borsäure.

10. Verfahren nach einem der vorstehenden Ansprüche, bei dem das verwendete Bornitrid mit einer oder mehreren Zusammensetzungen aus der folgenden Liste assoziiert ist: Polymere, ionische leitende Polymere, PVA, Borsäure.

11. Verfahren nach einem der vorstehenden Ansprüche, bei dem das verwendete Bornitrid vor der Aktivierung in eine polymere Membran eingebracht wird.

12. Verfahren nach einem der Ansprüche 1 bis 14, bei dem das aktivierte Bornitrid in eine polymere Membran eingebracht wird, bevor es für die Herstellung einer Brennstoffzelle, eines Elektrolyseapparates oder eines Akkumulators verwendet wird.

13. Verfahren nach einem der vorstehenden Ansprüche, bei dem das aktivierte Bornitrid gespült wird.

14. Verfahren nach einem der vorstehenden Ansprüche, bei dem der Schritt des Behandelns mit Fluid eine Dauer zwischen 10 und 50 Stunden, insbesondere zwischen 15 und 45 Stunden hat.
